# EUROPÄISCHE PATENTSCHRIFT

(11) **EP 1 375 549 B1**
(45) Veröffentlichungstag und Bekanntmachung des Hinweises auf die Patenterteilung: **29.11.2006**
(21) Anmeldenummer: 03012666.8
(22) Anmeldetag: 04.06.2003
(51) Int. Cl.: C08G 18/80, C09D 175/04, C08G 18/08

(54) **Nachvernetzbare Polyurethan-Polyharnstoff Dispersionen**
Self crosslinkable polyurethane-polyurea dispersions
Dispersions de polyuréthane-polyurée autodurcissable

(30) Priorität: 17.06.2002 DE 10226931
(43) Veröffentlichungstag der Anmeldung: 02.01.2004
(73) Patentinhaber: Bayer MaterialScience AG, 51368 Leverkusen (DE)
(72) Erfinder: Rische, Thorsten, Dr., 59423 Unna (DE); Naujoks, Karin, 51519 Odenthal (DE); Feller, Thomas, 42659 Solingen (DE); Gürtler, Christoph, Dr., 50676 Köln (DE); Mazanek, Jan, Dr., 51061 Köln (DE)

(56) Entgegenhaltungen:
- EP-A- 0 096 210
- EP-A- 0 178 398
- EP-A- 0 784 097

## Beschreibung

Die Erfindung betrifft neue nachvernetzbare Polyurethan-Polyharnstoffdispersionen, im Folgenden PUR-Dispersion genannt, deren Isocyanatengruppen mit Aralkylaminen blockiert sind, deren Herstellung und Verwendung.

Bei der Beschichtung von Substraten werden zunehmend lösemittelhaltige Bindemittel durch wässrige umweltfreundliche Systeme ersetzt. Insbesondere spielen Bindemittel auf Basis von Polyurethan-Polyharnstoff-Dispersionen, aufgrund ihrer exzellenten Eigenschaften, eine zunehmende Rolle. In vielen Anwendungsbereichen werden 2 K-Systeme, die meist aus einem OH-funklionellen Bindemittel und einem Polyisocyanat (blockiert oder unblockiert) bestehen eingesetzt. Außerdem sind 1K selbstvernetzende PUR-Dispersionen, die, wie z.B. in der US-A 4 387 181 beschrieben, über blockierte Isocyanatgruppen und gegenüber Isocyanaten reaktive Gruppen verfügen für viele Bereiche von großem Interesse. Die thermische Behandlung dieser Systeme nach Applikation liefert hoch vernetze Beschichtungen, die im wesentlichen jedoch keine oder nur geringe chemische Vernetzung mit dem beschichteten Substrat aufweisen. PUR-Dispersionen, die im Gegensatz hierzu über blockierte Isocyanatgruppen und keine nennenswerten Mengen an gegenüber Isocyanaten reaktive Gruppen verfügen können unter thermischer Belastung mit dem Substrat auf dem sie appliziert oder in das sie eingearbeitet worden sind vernetzt werden. Diese Art der sogenannten nachvernetzbaren PUR-Dispersionen werden beispielsweise in der DE-A 195 48 030 beschrieben.

Die wichtigsten Verbindungen, die zur Blockierung von Isocyanaten bzw. Polyisocyanaten eingesetzt werden sind ε-Caprolactam, Butanonoxim, Malonsäureester, sekundäre Amine sowie Triazol- und Pyrazolderivate, so wie sie z.B. in den EP-A 576 952, EP-A 566 953, EP-A 159 117, US-A 4 482 721, WO 97/12924 oder EP-A 744 423 als auch der DE-A 195 48 030 beschrieben sind.

Sekundäre Amine, u.a. auch Aralkyl-substituierte Amine als Blockierungsmittel sind z.B. aus der EP-A 96 210 bekannt. Der Einsatz solcher Amine in wässrigen Systemen, insbesondere in nachvernetzbaren PUR-Dispersionen ist aus der EP-A 96 210 jedoch nicht bekannt.

Bei Herstellung von wässrigen nachvernetzbaren PUR-Dispersionen werden üblicherweise Blockierungsmittel des Stands der Technik wie beispielsweise ε-Caprolactam, und Butanonoxim eingesetzt.

Während bei nachvernetzbaren PUR-Dispersionen, die über ε-Caprolactam blockierte Isocyanatgruppen verfügen, in der Regel Einbrenntemperaturen um 160°C angewandt werden, können nachvernetzbare PUR-Dispersionen, bei denen Butanonoxim als Blockierungsmittel eingesetzt wurde, schon bei 10-20°C niedrigeren Temperaturen deblockiert werden. Allerdings werden bei diesen Temperaturen in manchen Beschichtungen die gewünschten Eigenschaften nicht mehr erreicht. Hohe Deblockierungs- bzw. Trocknungstemperaturen bedingen außerdem oftmals eine unerwünschte Thermovergilbung der Bindemittel bzw. Beschichtung. Darüber hinaus werden diese Deblockierungstemperaturen inzwischen aus Kostengründen als zu hoch empfunden, so dass der Bedarf nach nachvernetzbaren PUR-Dispersionen entstanden ist, die blockierte Isocyanantgruppen enthalten, die bei niedrigeren Temperaturen als beim Butanonoxim mit einem entsprechenden Substrat vernetzen.

Ein weiterer Nachteil nachvernetzbarer PUR-Dispersionen des Stands der Technik ist die geringe Hydrolysebeständigkeit in Filmen bzw. Beschichtungen.

Die Aufgabe der vorliegenden Erfindung bestand daher in der Bereitstellung von nachvernetzbaren PUR-Dispersionen, die Isocyanatgruppen enthalten, welche mit einem Blockierungsmittel blockiert sind, das im Vergleich zum Stand der Technik über eine signifikant niedrigere Deblockierungstemperatur verfügt und darüber hinaus Beschichtungen die aus diesem Beschichtungsmittel resultieren hohe Hydrolysebeständigkeiten aufweisen.

Es wurde nun gefunden, dass PUR-Dispersionen die über mit Aralkylaminen blockierte Isocyanatgruppen verfügen, dem oben genannten Anforderungsprofil entsprechen.

Gegenstand der vorliegenden Erfindung sind wässrige, nachvernetzbare PUR-Dispersionen, die über mit Aralkylaminen blockierte Isocyanatgruppen verfügen, aufgebaut aus den Komponenten:
A1) Polyisocyanaten,
A2) polymeren Polyolen mit mittleren Molgewichten von 400 bis 6000,
A3) gegebenenfalls Mono- bzw. Polyalkoholen oder Mono- bzw. Polyaminen mit mittleren Molgewichten bis 400,
A4) mindestens einem Blockierungsmittel, welches zu mindestens 20 Gew.-% aus Aralkylaminen besteht,
sowie mindestens einer Verbindung ausgewählt aus
A5) Verbindungen, die mindestens eine ionische oder potentiell ionische Gruppe aufweisen und/oder
A6) nichtionisch hydrophilierend wirkenden Verbindungen, sowie gegebenenfalls Verdünnungsmittel, Lösungsmittel und Zuschlagsstoffe.

Aus den erfindungsgemäßen PUR-Dispersionen erhaltene Polymere weisen im wesentlichen keine gegenüber Isocyanaten reaktive Gruppen mehr auf.

Eine potentiell ionische Gruppe ist im Sinne der Erfindung eine Gruppe, die zur Ausbildung einer ionischen Gruppe befähigt ist.

Bevorzugt enthalten die erfindungsgemäßen PUR-Dispersionen 10 bis 40 Gew.-% A1), 30 bis 90 Gew.-% A2), 0 bis 30 Gew.-% A3), 1 bis 20 Gew.-% A4) 0 bis 15 Gew.-% ionischer oder potentiell ionischer Verbindungen A5) sowie 0 bis 40 Gew.-% von Verbindungen A6), wobei sich die Summe der Komponenten zu 100 Gew.-% addiert.

Besonders bevorzugt enthalten die erfindungsgemäßen PUR-Dispersionen 10 bis 30 Gew.-% A1), 30 bis 80 Gew.-% A2), 0 bis 20 Gew.-% A3), 1 bis 15 Gew.-% A4), 0 bis 8 Gew.-% ionischer oder potentiell ionischer Verbindungen A5) sowie 0 bis 35 Gew.-% von Verbindungen A6), wobei sich die Summe der Komponenten zu 100 Gew.-% addiert.

Ganz besonders bevorzugt enthalten die erfindungsgemäßen PUR-Dispersionen 15 bis 30 Gew.-% A1), 30 bis 70 Gew.-% A2), 0 bis 10 Gew.-% A3), 1 bis 10 Gew.-% A4), 0 bis 8 Gew.-% ionischer oder potentiell ionischer Verbindungen A5) sowie 5 bis 30 Gew.-% von Verbindungen A6), wobei sich die Summe der Komponenten zu 100 Gew.-% addiert.

Geeignete Diisocyanate (A1) sind grundsätzlich solche des Molekulargewichtsbereichs 140 bis 400 mit aliphatisch, cycloaliphatisch, araliphatisch und/oder aromatisch gebundenen Isocyanatgruppen, wie z.B. 1,4-Diisocyanatobutan, 1,6-Diisocyanatohexan (HDI), 2-Methyl-1,5-diisocyanatopentan, 1,5-Diisocyanato-2,2-dimethylpentan, 2,2,4- bzw. 2,4,4-Trimethyl-1,6-diisocyanatohexan, 1,10-Diisocyanatodecan, 1,3- und 1,4-Diisocyanatocyclohexan, 1,3- und 1,4-Bis-(isocyanatomethyl)-cyclohexan, 1-lsocyanato-3,3,5-trimethyl-5-isocyanatomethylcyclohexan (Isophorondiisocyanat, IPDI), 4,4'-Diisocyanatodicyclohexylmethan, 1-Isocyanato-1-methyl-4(3)isocyanatomethylcyclohexan, Bis-(isocyanatomethyl)-norbornan, 1,3- und 1,4-Bis-(2-isocyanato-prop-2-yl)-benzol (TMXDI), 2,4- und 2,6-Diisocyanatotoluol (TDI), 2,4'-und 4,4'-Diisocyanatodiphenylmethan, 1,5-Diisocyanatonaphthalin oder beliebige Gemische solcher Diisocyanate.

Bevorzugt handelt es sich um Polyisocyanate oder Polyisocyanatgemische der genannten Art mit ausschließlich aliphatisch und/oder cycloaliphatisch gebundenen Isocyanatgruppen. Ganz besonders bevorzugte Ausgangskomponenten (A1) sind Polyisocyanate bzw. Polyisocyanatgemische auf Basis von HDI, IPDI und/oder 4,4'-Diisocyanatodicyclohexylmethan.

Weiterhin geeignet als Polyisocyanate (A1) sind beliebige, durch Modifizierung einfacher aliphatischer, cycloaliphatischer, araliphatischer und/oder aromatischer Diisocyanate hergestellte, aus mindestens zwei Diisocyanaten aufgebaute Polyisocyanate mit Uretdion-, Isocyanurat-, Urethan-, Allophanat-, Biuret-, Iminooxadiazindion- und/oder Oxadiazintrionstruktur, wie sie beispielsweise in J. Prakt. Chem. 336 (1994) S. 185 - 200 beschrieben sind.

Die Isocyanatgruppen der Polyisocyanate (A1) der erfindungsgemäßen PUR-Dispersionen liegen zu mindestens 5 %, bevorzugt zu mindestens 10 % und besonders bevorzugt zu mindestens 15 % in blockierter Form vor.

Die polymeren Polyole (A2) in dem Molgewichtsbereich von 400 bis 6000 sind die üblichen wie sie für Polyurethane bereits seit langem eingesetzt werden, mit einer OH-Funktionalität von mindestens 1,6 bis 4, wie zum Beispiel Polyacrylate, Polyester, Polylactone, Polyether, Polycarbonate, Polyestercarbonate, Polyacetale, Polyolefine und Polysiloxane. Bevorzugt sind Polyole in einem Molgewichtsbereich von 600 bis 2500 mit einer OH-Funktionalität von 2 bis 3.

Die in Frage kommenden Hydroxylgruppen aufweisenden Polycarbonate sind durch Reaktion von Kohlensäurederivaten, z.B. Diphenylcarbonat, Dimethylcarbonat oder Phosgen mit Diolen erhältlich. Als derartige Diole kommen z.B. Ethylenglykol, 1,2-und 1,3-Propandiol, 1,3- und 1,4-Butandiol, 1,6-Hexandiol, 1,8-Octandiol, Neopentylglykol, 1,4-Bishydroxymethylcyclohexan, 2-Methyl-1,3-propandiol, 2,2,4-Trimethylpentandiol-1,3, Dipropylenglykol, Polypropylenglykole, Dibutylenglykol, Polybutylenglykole, Bisphenol A, Tetrabrombisphenol A aber auch Lacton-modifizierte Diole in Frage. Bevorzugt enthält die Diolkompomponente 40 bis 100 Gew.-% Hexandiol, bevorzugt 1,6-Hexandiol und/oder Hexandiol-Derivate, vorzugsweise solche, die neben endständigen OH-Gruppen Ether- oder Estergruppen aufweisen, z.B. Produkte, die durch Umsetzung von 1 Mol Hexandiol mit mindestens 1 Mol, bevorzugt 1 bis 2 Mol Caprolacton gemäß der DE-A 17 70 245 oder durch Veretherung von Hexandiol mit sich selbst zum Di- oder Trihexylenglykol erhalten wurden. Die Herstellung solcher Derivate ist z.B. aus der DE-A 15 70 540 bekannt. Auch die in der DE-A 37 17 060 beschriebenen Polyether-Polycarbonatdiole können eingesetzt werden.

Die Hydroxylpolycarbonate sollten im wesentlichen linear sein. Sie können jedoch gegebenenfalls durch den Einbau polyfunktioneller Komponenten, insbesondere niedermolekularer Polyole, leicht verzweigt werden. Hierzu eignen sich beispielsweise Glycerin, Trimethylolpropan, Hexantriol-1,2,6, Butantriol-1,2,4, Trimethylolpropan, Pentaerythrit, Chinit, Mannit, und Sorbit, Methylglykosid, 1,3,4,6-Dianhydrohexite.

Als Polyetherpolyole geeignet sind die in der Polyurethanchemie an sich bekannten Polytetramethylenglykolpolyether, die z.B. über Polymerisation von Tetrahydrofuran durch kationische Ringöffnung hergestellt werden können.

Darüber hinaus geeignete Polyetherpolyole sind Polyether, wie z.B. die unter Verwendung von Startermolekülen hergestellten Polyole aus Styroloxid, Propylenoxid, Butylenoxide oder Epichlorhydrins, insbesondere des Propylenoxids.

Als Polyesterpolyole geeignet sind z.B. Umsetzungsprodukte von mehrwertigen, bevorzugt zweiwertigen und gegebenenfalls zusätzlich dreiwertigen Alkoholen mit mehrwertigen, bevorzugt zweiwertigen Carbonsäuren. Anstelle der freien Polycarbonsäuren können auch die entsprechenden Polycarbonsäureanhydride oder entsprechende Polycarbonsäureester von niedrigen Alkoholen oder deren Gemische zur Herstellung der Polyester verwendet werden. Die Polycarbonsäuren können aliphatischer, cycloaliphatischer, aromatischer und/oder heterocyclischer Natur sein und gegebenenfalls, z.B. durch Halogenatome, substituiert und/oder ungesättigt sein.

Für die Terminierung des Polyurethan-Prepolymers geeignete Komponenten (A3) kommen monofunktionelle Alkohole und Monoamine in Betracht. Bevorzugte Monoalkohole sind aliphatische Monoalkohole mit 1 bis 18 C-Atomen, wie z.B. Ethanol, n-Butanol, Ethylenglykol-monobutylether, 2-Ethylhexanol, 1-Octanol, 1-Dodecanol oder 1-Hexadecanol. Bevorzugte Monoamine sind aliphatische Monoamine, wie z.B. Diethylamin, Dibutylamin, Ethanolamin, N-Methylethanolamin oder N,N-Diethanolamin.

Ebenfalls als Komponente (A3) sind Polyole, Aminopolyole oder Polyamine mit einem Molgewicht unter 400 geeignet, die in der entsprechenden Literatur in großer Zahl beschrieben sind.

Bevorzugte Komponenten (A3) sind beispielsweise:
a) Alkandiole, wie Ethandiol, 1,2- und 1,3-Propandiol, 1,4- und 2,3-Butandiol, 1,5-Pentandiol, 1,3 Dimethylpropandiol, 1,6-Hexandiol, Neopentylglykol, Cyclohexandimethanol, 2-Methyl-1,3-propandiol,
b) Etherdiole, wie Diethylendiglykol, Triethylenglykol oder Hydrochinon-dihydroxyethylether,
c) Esterdiole der allgemeinen Formeln (III) und (IV),

   HO-(CH₂)ₓ-CO-O-(CH₂)_{y}-OH (III),

   HO-(CH₂)ₓ-O-CO-R-CO-O(CH₂)ₓ-OH (IV),

   in welchen
   - R: ein Alkylen- oder Arylenrest mit 1 bis 10 C-Atomen, bevorzugt 2 bis 6 C-Atomen,
   - x: 2 bis 6 und
   - y: 3 bis 5 ist,
   wie z.B. δ-Hydroxybutyl-ε-hydroxy-capronsäureester, ω-Hydroxyhexyl-γ-hydroxybutter-säureester, Adipinsäure-(β-hydroxyethyl)ester und Terephthalsäurebis(β-hydroxy-ethyl)ester und
d) Polyamine wie Ethylendiamin, 1,2- und 1,3-Diaminopropan, 1,4-Diaminobutan, 1,6-Diaminohexan, Isophorondiamin, Isomerengemisch von 2,2,4-und 2,4,4-Trimethylhexa-methylendiamin, 2-Methyl-pentamethylendiamin, Diethylen-triamin, 1,3- und 1,4-Xylylendiamin, α,α,α',α'-Tetramethyl-1,3-und -1,4-xylylendiamin und 4,4-Diaminodicyclohexylmethan. Als Diamine im Sinne der Erfindung sind auch Hydrazin, Hydrazinhydrat und substituierte Hydrazine geeignet, wie z.B. N-Methylhydrazin, N,N'-Dimethylhydrazin und deren Homologe sowie Säuredihydrazide, Adipinsäure, β-Methyladipinsäure, Sebacinsäure, Hydracrylsäure und Terephthalsäure, Semicarbazido-alkylenhydrazide, wie z.B. β-Semicarbazidopropionsäurehydrazid (z.B. DE-A 17 70 591), Semicarbazidoalkylen-carbazinester, wie z.B. 2-Semicarbazidoethylcarbazinester (z.B. DE-A 19 18 504) oder auch Aminosemicarbazid-Verbindungen, wie z.B. β-Aminoethylsemicarbazido-carbonat (z.B. DE-A 19 02 931).

Die Aralkylamine der Komponente A4) entsprechen der Formel (V) 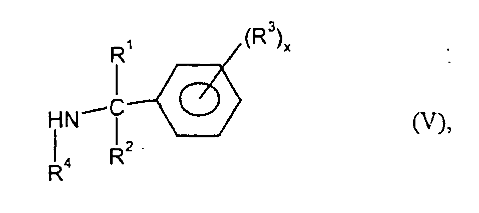 worin
- R¹, R², R³: gleich oder verschieden sein können und Wasserstoff, C₁-C₄-Alkyl, C₆-C₁₀-Cycloalkyl bedeuten, wobei Wasserstoff bevorzugt ist,
- R⁴: C₁-C₄-Alkyl, C₆-C₁₀-Cycloalkyl oder C₁-C₁₄-Aralkyl, bevorzugt Methyl, Ethyl, Isopropyl und tert.-Butyl, besonders bevorzugt tert.-Butyl, bedeuten
- x: für die Zahl 1, 2, 3, 4 oder 5 steht.

Als Beispiel für Blockierungsmittel A4) seien genannt: N-Methyl-, N-Ethyl-, N-(Iso)propyl-, N-n-Butyl-, N-iso-Butyl-, N-tert.- Butyl- benzylamin oder 1,1-Dimethylbenzylamin, N-Alkyl-N-1,1 -Dimethylmethylphenylamin, Addukte von Benzylamin an Verbindungen mit aktivierten Doppelbindungen wie Malonsäureestem, N,N-Dimethylaminopropylbenzylamin und andere tertiäre Aminogruppen enthaltende gegebenenfalls substituierte Benzylamine und/oder Dibenzylamin. Selbstverständlich können auch Gemische dieser Amine untereinander und/oder mit anderen Blockierungsmitteln eingesetzt werden. Dabei handelt es sich beispielsweise um Alkohole, Lactame, Oxime, Malonester, Alkylacetoacetate, Triazole, Phenole, lmidazole, Pyrazole sowie Amine, wie z.B. Butanonoxim, Diisopropylamin, 1,2,4-Triazol, Dimethyl-1,2,4-triazol, Imidazol, Malonsäurediethylester, Acetessigester, Acetonoxim, 3,5-Dimethylpyrazol, ε-Caprolactam oder beliebige Gemische dieser Blockierungsmittel. Bevorzugt werden N-Aralkylamine wie N-(Iso)propyl-, N-n-Butyl-, N-iso-Butyl-, N-tert.- Butylbenzylamin als Blockierungsmittel A4) verwendet. Besonders bevorzugtes Blockierungsmittel A4) ist N-tert.-Butylbenzylamin.

Geeignete ionische oder potentiell ionische Verbindungen A5), die zusätzlich oder anstelle der nichtionischen Verbindungen A6) eingesetzt werden können, sind z.B. Mono- und Dihydroxycarbonsäuren, Mono- und Diaminocarbonsäuren, Mono- und Dihydroxysulfonsäuren, Mono- und Diaminosulfonsäuren sowie Mono- und Dihydroxyphosphonsäuren bzw. Mono- und Diaminophosphonsäuren und ihre Salze wie Dimethylolpropionsäure, Hydroxypivalinsäure, N-(2-Aminoethyl)-β-alanin, 2-(2-Amino-ethylamino)-ethansulfonsäure, Ethylendiamin-propyl- oder butylsulfonsäure, 1,2- oder 1,3-Propylendiamin-β-ethylsulfonsäure, Lysin, 3,5-Diaminobenzoesäure, das Hydrophilierungsmittel gemäß Beispiel 1 aus der EP-A 0 916 647 und deren Alkali- und/oder Ammoniumsalze; das Addukt von Natriumbisulfit an Buten-2-diol-1,4, Polyethersulfonat, das propoxylierte Addukt aus 2-Butendiol und NaHSO₃ (z.B. in der DE-A 2 446 440, Seite 5-9, Formel I-III) sowie in kationische Gruppen überführbare Bausteine wie N-Methyl-diethanolamin als hydrophile Aufbaukomponenten. Bevorzugte ionische oder potentielle ionische Verbindungen A5) sind solche, die über Carboxy- oder Carboxylat- und/oder Sulfonatgruppen und/oder Ammoniumgruppen verfügen. Besonders bevorzugte ionische Verbindungen A5) sind solche, die Carboxyl- und/oder Sulfonatgruppen als ionische oder potentiell ionische Gruppen enthalten, wie die Salze von N-(2-Aminoethyl)-β-alanin, 2-(2-Amino-ethylamino)-ethansulfonsäure, des Hydrophilierungsmittels gemäß Beispiel 1 aus EP-A 0 916 647 sowie der Dimethylolpropionsäure.

Die unter die Komponenten (A2), (A3) und (A5) fallenden Hydroxy-Komponenten können Doppelbindungen enthalten, die z.B. aus langkettigen aliphatischen Carbonsäuren oder Fettalkoholen stammen können. Eine Funktionalisierung mit olefinischen Doppelbindungen ist beispielsweise durch den Einbau allylischer Gruppen oder von Acrylsäure oder Methacrylsäure sowie deren jeweiligen Estern möglich.

Weiterhin können die erfindungsgemäßen PUR-Dispersionen nichtionisch hydrophilierend wirkende Verbindungen (A6), z.B. Polyoxyalkylenether mit mindestens einer Hydroxy- oder Aminogruppe, enthalten. Diese Polyether enthalten einen Anteil von 30 Gew.-% bis 100 Gew.-% an Bausteinen, die vom Ethylenoxid abgeleitet sind. In Frage kommen linear aufgebaute Polyether einer Funktionalität zwischen 1 und 3, aber auch Verbindungen der allgemeinen Formel (VI), 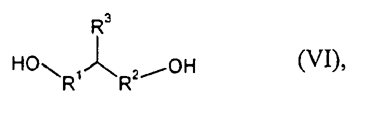 in welcher
- R¹ und R²: unabhängig voneinander jeweils einen zweiwertigen aliphatischen, cycloaliphatischen oder aromatischen Rest mit 1 bis 18 C-Atomen, die durch Sauerstoff und/oder Stickstoffatome unterbrochen sein können, bedeuten und
- R³: für einen nicht-hydroxyterminierten Polyester oder bevorzugt Polyether steht. Besonders bevorzugt steht R³ für einen alkoxyterminierten Polyethylenoxidrest.

Nichtionisch hydrophilierend wirkende Verbindungen A6) sind beispielsweise auch einwertige, im statistischen Mittel 5 bis 70, bevorzugt 7 bis 55 Ethylenoxideinheiten pro Molekül aufweisende Polyalkylenoxidpolyetheralkohole, wie sie in an sich bekannter Weise durch Alkoxylierung geeigneter Startermoleküle zugänglich sind (z.B. in Ullmanns Encyclopädie der technischen Chemie, 4.Auflage, Band 19, Verlag Chemie, Weinheim S. 31-38). Geeignete Startermoleküle sind beispielsweise gesättigte Monoalkohole wie Methanol, Ethanol, n-Propanol, Isopropanol, n-Butanol, Isobutanol, sec-Butanol, die Isomeren Pentanole, Hexanole, Octanole und Nonanole, n-Decanol, n-Dodecanol, n-Tetradecanol, n-Hexadecanol, n-Octadecanol, Cyclohexanol, die isomeren Methylcyclohexanole oder Hydroxymethylcyclohexan, 3-Ethyl-3-hydroxymethyloxetan, oder Tetrahydrofurfurylalkohol; Diethylenglykolmonoalkylether wie beispielsweise Diethylenglykolmonobutylether; ungesättigte Alkohole wie Allylalkohol, 1,1-Dimethylallylalkohol oder Oleinalkohol, aromatische Alkohole wie Phenol, die isomeren Kresole oder Methoxyphenole, araliphatische Alkohole wie Benzylalkohol, Anisalkohol oder Zimtalkohol; sekundäre Monoamine wie Dimethylamin, Diethylamin, Dipropylamin, Diisopropylamin, Dibutylamin, Bis-(2-ethylhexyl)-amin, N-Methyl- und N-Ethylcyclohexylamin oder Dicyclohexylamin sowie heterocyclische sekundäre Amine wie Morpholin, Pyrrolidin, Piperidin oder 1H-Pyrazol.

Bevorzugte Startermoleküle sind gesättigte Monoalkohole sowie Diethylenglykolmonoalkylether. Besonders bevorzugt wird Diethylenglykolmonobutylether als Startermolekül verwendet.

Für die Alkoxylierungsreaktion geeignete Alkylenoxide sind insbesondere Ethylenoxid und Propylenoxid, die in beliebiger Reihenfolge oder auch im Gemisch bei der Alkoxylierungsreaktion eingesetzt werden können.

Bei den Polyalkylenoxidpolyetheralkoholen handelt es sich entweder um reine Polyethylenoxidpolyether oder gemischte Polyalkylenoxidpolyether, deren Alkylenoxideinheiten zu mindestens 30 mol-% bevorzugt zu mindestens 40 mol-% aus Ethylenoxideinheiten bestehen. Bevorzugte nichtionische Verbindungen sind monofunktionelle gemischte Polyalkylenoxidpolyether, die mindestens 40 mol-% Ethylenoxid- und maximal 60 mol-% Propylenoxideinheiten aufweisen.

Zur Hydrophilierung der erfindungsgemäßen nachvernetzbaren PUR-Dispersionen können auch Kombinationen von ionischen (A5) und nichtionischen (A6) Hydrophilierungsmitteln verwendet werden. Ist dies der Fall, so werden bevorzugt Kombinationen aus anionischen (A5) und nichtionischen (A6) Hydrophilierungsmitteln eingesetzt. Insgesamt ist bei der Herstellung der erfindungemäßen nachvernetzbaren PUR-Dispersionen die ausschließliche Verwendung von nichtionischen Hydrophilierungsmitteln A6) bevorzugt.

Die Herstellung der erfindungsgemäßen wässrigen Polyurethan-Dispersionen erfolgt in der aus dem Stand der Technik bekannten Art wie sie beispielsweise von D. Dieterich in einem Übersichtsartikel [D. Dieterich, Prog. Org. Coatings **9**, 281 (1981)] zusammengefasst worden sind. Die Polyisocyanatkomponente A1) wird mit den Komponenten A2), und/oder A3) und/oder A6), Blockierungsmittel A4) und niedermolekularen Kettenverlängerern A3) und/oder A5) zu einem Polyurethan ausreagiert, wobei gegebenenfalls ein Lösungsmittel mitverwendet wird, das später wieder abgetrennt werden kann. Als Lösemittel geeignet sind die an sich bekannten üblichen Lacklösemittel, wie z.B. Ethylacetat, Butylacetat, 1-Methoxypropyl-2-acetat, 3-Methoxy-n-butylacetat, Aceton, 2-Butanon, 4-Methyl-2-pentanon, Cyclohexanon, Toluol, Xylol, Chlorbenzol, Testbenzin, Mischungen, die vor allem höher substituierte Aromaten enthalten, wie sie beispielsweise unter den Bezeichnungen Solvent Naphtha, Solvesso^{®} (Exxon Chemicals, Houston, USA), Cypar^{®} (Shell Chemicals, Eschborn, DE), Cyclo Sol^{®} (Shell Chemicals, Eschborn, DE), Tolu Sol^{®} (Shell Chemicals, Eschborn, DE), Shellsol^{®} (Shell Chemicals, Eschborn, DE) im Handel sind, Kohlensäureester, wie Dimethylcarbonat, Diethylcarbonat, 1,2-Ethylencarbonat und 1,2-Propylencarbonat, Lactone, wie β-Propiolacton, γ-Butyrolacton, ε-Caprolacton, ε-Methylcaprolacton, Propylenglykoldiacetat, Diethylenglykoldimethylether, Dipropylenglykoldimethylether, Diethylenglykolethyl- und -butyletheracetat, N-Methylpyrrolidon und N-Methylcaprolactam, oder beliebige Gemische solcher Lösemittel. Bevorzugte Lösemittel sind Aceton, 2-Butanon und N-Methylpyrrolidon. Besonders bevorzugt ist Aceton.

In einem weiteren Schritt werden gegebenenfalls anschließend zur Neutralisation befähigte Gruppen in die Salzform überführt und in die wässrige Phase überführt. Je nach Neutralisationsgrad und Gehalt ionischer Gruppen kann die Dispersion sehr feinteilig eingestellt werden, so dass sie praktisch das Aussehen einer Lösung hat, aber auch sehr grobteilige Einstellungen sind möglich, die ebenfalls ausreichend stabil sind.

Bevorzugt sind jedoch mittlere Teilchengrößen von kleiner 300 nm, da diese die Emulgierung eines Polyisocyanats und damit die Qualität des Lackfilms verbessert.

Bevorzugt werden zunächst die Polyol-Komponenten A2), A3) und A6) sowie das Blockierungsmittel A4) vorgelegt und mit den Polyisocyanaten A1 umgesetzt. Anschließend werden ggf. weitere hydroxyfunktionelle Komponenten A3) hinzugefügt und das Reaktionsgemisch zu einem Polyurethan-Prepolymer ohne Zusatz von Lösemittel umgesetzt. Die Dispergierung des Prepolymers erfolgt durch Zugabe von Wasser. Anschließend werden ggf. aminofunktionelle Komponenten A3) und /oder A5) z.B. in Form einer wässrigen Lösung hinzugegeben.

Der Feststoffgehalt der erfindungsgemäßen nachvernetzbaren PUR-Dispersionen kann in Grenzen von 10 bis 70 Gew.-% variiert werden. Bevorzugt enthalten die erfindungsgemäßen nachvernetzbaren PUR-Dispersionen einen Festkörpergehalt von 20 bis 60 Gew.-% und besonders bevorzugt von 25 bis 50 Gew.-%. Der Anteil von Lösemitteln an der Gesamtzusammensetzung ist bevorzugt kleiner 15 Gew.-%, besonders bevorzugt kleiner 10 Gew.-% und ganz besonders bevorzugt kleiner 5 Gew.-%.

Die erfindungsgemäßen PUR-Dispersionen können in Kombination mit geeigneten Reaktionspartnern, die gegenüber Isocyanaten reaktionsfähige Gruppen aufweisen, beispielsweise wässrige Bindemittel, wie Polyurethan- und/oder Polyacrylatdispersionen bzw. deren Mischungen oder Hybride eingesetzt werden. Geeignete Reaktionspartner sind ebenfalls niedermolekulare Amine, die gelöst in Wasser zu hitzvemetzbaren, aus wässriger Phase verarbeitbaren Beschichtungsmitteln verarbeitet werden können. Des weiteren können die erfindungsgemäßen PUR-Dispersionen auch in 1K-Bindemitteln wie beispielsweise Polyurethan- und/oder Polyacrylatdispersionen sowie Polyurethan-Polyacrylat-Hybriddispersionen eingearbeitet werden.

Die erfindungsgemäßen nachvernetzbaren PUR-Dispersionen können auch ohne Zusatz eines weiteren Reaktionspartners verwendet werden, beispielsweise zur Beschichtung bzw. Beschlichtung oder Imprägnierung von Substraten, die gegenüber Isocyanatgruppen reaktionsfähige Wasserstoffatome aufweisen.

Gegenstand der Erfindung ist ebenfalls die Verwendung der erfindungsgemäßen PUR-Dispersionen in Lack- und Beschichtungsmitteln.

Die erfindungsgemäßen nachvernetzbaren PUR-Dispersionen werden entweder allein oder in Kombination mit anderen wässrigen Bindemitteln zur Herstellung von Beschichtungsmitteln eingesetzt. Solche wässrigen Bindemittel können z.B. aus Polyester-, Polyacrylat, Polybutadien-, Polyvinyacetat-, Polyepoxid- oder anderen Polyurethanpolymeren aufgebaut sein. Auch die Kombination mit strahlenhärtbaren Bindemitteln, wie sie z. B. in der EP-A-0 753 531 beschrieben sind, ist möglich.

Die erfindungsgemäßen nachvernetzbaren PUR-Dispersionen werden bevorzugt als Bindemittel in Beschichtungen und Klebstoffen verwendet. Beschichtungen auf Basis der erfindungsgemäßen Zusammensetzungen können auf beliebige Substrate aufgebracht werden, z.B. Metall, Holz, Glas, Glasfasern, Kohlefasern, Stein, keramische Mineralien, Beton, harte und flexible Kunststoffe der verschiedensten Arten, gewebten und nicht gewebten Textilien, Leder, Papier, Hartfasern, Stroh und Bitumen die vor der Beschichtung gegebenenfalls auch mit üblichen Grundierungen versehen werden können. Bevorzugte Substrate sind Glasfasern, Kohlefasern, Metalle, Textilien und Leder. Ein besonders bevorzugtes Substrat ist die Glasfaser.

Die erfindungsgemäßen nachvernetzbaren PUR-Dispersionen können als solche oder in Kombination mit den aus der Lacktechnologie bekannten Hilfs- und Zusatzmitteln wie z.B. nichtionischen und/oder anionischen Verdickern, Füllstoffen, Pigmenten, Wachsen, Griffmitteln, Farbstoffen, Lösungsmitteln, Verlaufshilfsmitteln sowie Vernetzern zur Herstellung von Beschichtungen verwendet werden.

Der Auftrag der Beschichtungsmaterialien kann auf bekannte Weisen, z.B. durch Streichen, Gießen, Rakeln, Spritzen, Walzen oder Tauchen erfolgen. Die Trocknung des Lackfilms kann bei Raumtemperatur oder erhöhter Temperatur, aber auch durch Einbrennen bei bis zu 200°C erfolgen.

Die erfindungsgemäßen PUR-Dispersionen sind lager- und versandfähig und können zu einem beliebig späteren Zeitpunkt verarbeitet werden. Je nach der gewählten chemischen Zusammensetzung des Polyurethans erhält man Beschichtungen mit unterschiedlichen Eigenschaften. So können weiche klebrige Schichten, thermoplastische und gummielastische Produkte der verschiedensten Härtegrade bis zu glasharten Duroplasten erhalten werden.

Bevorzugt ist außerdem die Verwendung der erfindungsgemäßen nachvernetzbaren PUR-Dispersionen in oder als Schlichten, insbesondere Glasfaserschlichten.

Die erfindungsgemäßen PUR-Dispersionen können dabei in den Schlichten allein oder bevorzugt mit anderen Bindemitteln wie z.B. Polyacrylatdispersionen, Polyurethan-Polyacrylat-Hybriddispersionen, Polyvinylether- bzw. Polyvinylesterdispersionen, Polystyrol- bzw. Polyacrylnitrildispersionen, auch in Kombination mit Vernetzern wie blockierten Polyisocyanaten (Vernetzer) und Aminovernetzerharzen wie z.B. Melaminharzen eingesetzt werden.

Weiterhin ist es möglich, vor der Applikation weitere Vernetzer zuzusetzen. Hierfür geeignet sind bevorzugt hydrophile bzw. hydrophilierte Polyisocyanatvernetzer.

Für die Herstellung der Schlichten werden die erfindungsgemäßen nachvernetzbaren PUR-Dispersionen meist als Bindemittel- und Vernetzerkomponente eingesetzt und können weitere Komponenten wie Emulgatoren, weitere filmbildende Harze, Haftvermittler, Gleitmittel und Hilfsstoffe wie Netzmittel oder Antistatika enthalten. Die Haftvermittler, Gleitmittel und Hilfsstoffe, das Verfahren zur Herstellung der Schlichten sowie das Verfahren der Beschlichtung von Glasfasern und die Nachbearbeitung der Glasfasern sind bekannt und beispielsweise in K.L. Loewenstein "The Manufacturing Technology of Continous Glass Fibres", Elsevier Scientific Publishing Corp., Amsterdam, London, New York, 1983, beschrieben.

Gegenstand der vorliegenden Erfindung sind auch Glasfasern beschlichtet mit einer Schlichte enthaltend die erfindungsgemäßen PUR-Dispersionen.

Für die beschlichteten Glasfasern sind sowohl die für die Glasseidenfabrikation verwendeten, bekannten Glastypen wie E-, A-, C-, und S- Glas als auch die anderen an sich bekannten Erzeugnisse der Glasfaserhersteller geeignet. Unter den genannten Glastypen für die Herstellung von Endlosglasfasern besitzen die E-Glasfasern aufgrund ihrer Alkalifreiheit, hohen Zugfestigkeit und hohen Elastizitätsmodul die größte Bedeutung für die Verstärkung von Kunststoffen.

Als Matrixpolymere können eine Vielzahl von Thermoplasten bzw. duroplastisch härtbaren Polymeren verwendet werden. Beispielsweise sind als thermoplastische Polymere geeignet: Polyolefine wie Polyethylen oder Polypropylen, Polyvinylchlorid, Polymerisate wie Styrol/Acrylnitril-Copolymere, ABS, Polymethacrylat oder Polyoxymethylen, aromatische und/oder aliphatische Polyamide wie Polyamid-6 oder Polyamid-6,6, Polykondensate wie Polycarbonat, Polyethylenterephthalat, flüssigkristalline Polyarylester, Polyarylenoxid, Polysulfon, Polyarylensulfid, Polyarylsulfon, Polyethersulfon, Polyarylether oder Polyetherketon oder Polyaddukte wie Polyurethane. Als duroplastisch härtbare Polymere seien beispielsweise genannt: Epoxidharze, ungesättigte Polyesterharze, Phenolharze Aminharze, Polyurethanharze, Pollyisocyanurate, Epoxid/Isocyanurat-Kombinationsharze, Furanharze, Cyanuratharze und Bismaleinimidharze.

### Beispiele

Die Bestimmung der mechanischen Eigenschaften von nachvernetzbaren PUR-Dispersionen erfolgt an freien Filmen die wie folgt hergestellt werden:

In einem Filmziehgerät, bestehend aus zwei polierten Walzen, die auf einen exakten Abstand eingestellt werden können, wird vor die hintere Walze ein Trennpapier eingelegt. Mit einer Fühlerblattlehre wird der Abstand zwischen Papier und vorderer Walze eingestellt. Dieser Abstand entspricht der Filmdicke (nass) der resultierenden Beschichtung, und kann auf die gewünschte Auflage jedes Striches eingestellt werden. Die Beschichtung ist auch konsekutiv in mehreren Strichen möglich. Zum Aufbringen der einzelnen Striche werden die Produkte (wässrige Formulierungen werden vorher durch Zugabe von Ammoniak/ Polyacrylsäure auf eine Viskosität von 4500 mPa s gestellt) auf den Spalt zwischen Papier und vorderer Walze gegossen, das Trennpapier wird senkrecht nach unten weggezogen, wobei auf dem Papier der entsprechende Film entsteht. Sollen mehrere Striche aufgebracht werden, wird jeder einzelne Strich getrocknet und das Papier erneut eingelegt.

Die Bestimmung des 100 % Moduls, erfolgte nach DIN 53504 an Filmen > 100 µm Stärke.

Die Bestimmung der mittleren Teilchengrößen (angegeben ist das Zahlenmittel) der PUR-Dispersionen erfolgte mittels Laserkorrelations-Spektroskopie (Gerät: Malvern Zetasizer 1000, Malver Inst. Limited).

Die Filmlagerung unter Hydrolysebedingungen erfolgt gemäß DIN EN 12280-3. Die Bestimmung der Mechanik dieser Filmproben wird nach 24 h Lagerung unter Normklimabedingungen (20°C und 65 % Luftfeuchtigkeit) gemäß DIN 53504 durchgeführt.

### Beispiel 1 (erfindungsgemäß):

128,8 g des Polyethers ^{®}Desmophen 3600 Z (Bayer AG, DE, difunktioneller Polyether auf Propylenoxidbasis mit einem mittleren Molgewicht von 2000 (OHZ = 56)), 25,6 g ^{®}Polyether L 400 (Bayer AG, DE, difunktioneller ^{®}Polyether auf Propylenoxidbasis mit einem mittleren Molgewicht von 561 (OHZ = 200)), 86,4 g Polyether LB 25 (Bayer AG, DE, monofunktioneller Polyether auf Ethylenoxid/Propylenoxidbasis mit einem mittleren Molgewicht von 2250 (OHZ = 25)) sowie 21,5 g N-tert.-Butylbenzylamin werden vorgelegt und auf 70°C erwärmt. Anschließend werden 100,01 g ^{®}Desmodur W innerhalb von 5 min zugegeben. Die Nachrührzeit bei 75°C beträgt 45 min. Nach Zugabe von 5,2 g Trimethylolpropan rührt man das Reaktionsgemisch solange bei 75°C bis der theoretische NCO-Wert erreicht ist und kühlt danach auf 60°C ab. Die Dispergierung erfolgt durch Zugabe von 527,0 g Wasser (20°C) innerhalb von 10 min. Unmittelbar nach Dispergierung wird innerhalb von 5 min eine Lösung aus 1,70 g Hydrazin-Monohydrat, 10,2 g Isophorondiamin und 178,6 g Wasser bei 40°C zudosiert. Die Nachrührzeit bei 40°C beträgt 3 h. Man erhält eine lagerstabile wässrige PUR-Dispersion, die über blockierte Isocyanatgruppen verfügt, mit einem Festkörpergehalt von 33,0 %.

### Beispiel 2 (Vergleichsbeispiel)

128,8 g des Polyethers ^{®}Desmophen 3600 Z (Bayer AG, DE, difunktioneller Polyether auf Propylenoxidbasis mit einem mittleren Molgewicht von 2000 (OHZ = 56)), 25,6 g ^{®}Polyether L 400 ((Bayer AG, DE, difunktioneller Polyether auf Propylenoxidbasis mit einem mittleren Molgewicht von 561 (OHZ = 200)), 86,4 g ^{®}Polyether LB 25 (Bayer AG, DE, monofunktioneller Polyether auf Ethylenoxid/Propylenoxidbasis mit einem mittleren Molgewicht von 2250 (OHZ = 25)) sowie 14,9 g ε-Caprolactam werden vorgelegt und auf 70°C erwärmt. Anschließend werden 100,01 g ^{®}Desmodur W innerhalb von 5 min zugegeben und das Reaktionsgemisch auf 100°C erwärmt. Die Nachrührzeit bei 100°C beträgt 45 min. Nach Zugabe von 5,2 g Trimethylolpropan rührt man das Reaktionsgemisch solange bei 100°C bis der theoretische NCO-Wert erreicht ist und kühlt danach auf 60°C ab. Die Dispergierung erfolgt durch Zugabe von 527,0 g Wasser (20°C) innerhalb von 10 min. Unmittelbar nach Dispergierung wird innerhalb von 5 min eine Lösung aus 1,70 g Hydrazin-Monohydrat, 10,2 g Isophorondiamin und 178,6 g Wasser bei 40°C zudosiert. Die Nachrührzeit bei 40°C beträgt 3 h. Man erhält eine lagerstabile wässrige PUR-Dispersion, die über blockierte Isocyanatgruppen verfügt, mit einem Festkörpergehalt von 34,6 %.

**Tabelle 1: Ergebnisse der mechanischen Eigenschaften freier Filme hergestellt aus den Beispielen 1 und 2**

| | **Beispiel 1** | **Beispiel 2** |
|---|---|---|
| | **(erfindungsgemäß)** | **(Vergleichsbeispiel)** |
| Blockierungsmittel | tert.-Butylbenzylamin | Caprolactam |
| mittlere Teilchengröße | 169 nm | 180 nm |
| Trocknungsbedingungen | 10 min, 125°C | 10 min, 125°C |

| **Zugversuch: 0-Wert** | | |
|---|---|---|
| 100 % Modul [MPa] | 2,1 | 1,6 |
| Zugfestigkeit [MPa] | 3,6 | 3,3 |
| Reißdehnung [%] | 250 | 180 |

| **Zugversuch nach 7d Hydrolyse** | | |
|---|---|---|
| Zugfestigkeit [MPa] | 3,8 | 3,6 |
| Reißdehnung [%] | 130 | 180 |

| **Zugversuch nach 2 Wochen Hydrolyse** | | |
|---|---|---|
| Zugfestigkeit [MPa] | 4,0 | 4,2 |
| Reißdehnung [%] | 170 | 250 |

| **Zugversuch nach 4 Wochen Hydrolyse** | | |
|---|---|---|
| Zugfestigkeit [MPa] | 4,3 | 2,3 |
| Reißdehnung [%] | 130 | 110 |

| **Zugversuch nach 6 Wochen Hydrolyse** | | |
|---|---|---|
| Zugfestigkeit [MPa] | 4,3 | zerlaufen |
| Reißdehnung [%] | 120 | zerlaufen |

| **Zugversuch nach 8 Wochen Hydrolyse** | | |
|---|---|---|
| Zugfestigkeit [MPa] | 3,9 | zerlaufen |
| Reißdehnung [%] | 130 | zerlaufen |

| **Zugversuch nach 10 Wochen Hydrolyse** | | |
|---|---|---|
| Zugfestigkeit [MPa] | 3,2 | zerlaufen |
| Reißdehnung [%] | 100 | zerlaufen |

Die in Tabelle 1 gezeigten Ergebnisse belegen, dass mit der Verwendung von der erfindungsgemäßen PUR-Dispersion gemäß Beispiel 1 eine wesentlich höhere Hydrolysebeständigkeit als mit der PUR-Dispersion des Stands der Technik (Beispiel 2) erreicht wird. Darüber hinaus lässt sich anhand der Zugfestigkeit und Bruchdehnung erkennen, dass mit der Dispersion gemäß Beispiel 1 nach einer Trocknungszeit von 10 min bei 125°C signifikant höhere mechanische Eigenschaften aufgrund der niedrigeren Deblockierungstemperatur des Blockierungsmittels N-tert.-Butylbenzylamin im Vergleich zu Dispersion gemäß Beispiel 2 in der ein Blockierungsmittel des Stands der Technik (Caprolactam) enthalten ist, erreicht werden.

## Patentansprüche

1. Wässrige, nachvernetzbare Polyurethan-Polyharnstoffdispersionen aufgebaut aus:
A1) Polyisocyanaten,
A2) polymeren Polyolen mit mittleren Molgewichten von 400 bis 6000,
A3) gegebenenfalls Mono- bzw. Polyalkoholen oder Mono- bzw. Polyaminen mit mittleren Molgewichten bis 400,
A4) mindestens einem Blockierungsmittel, welches zu mindestens 20 Gew.-% aus Aralkylaminen besteht,
sowie mindestens einer Verbindung ausgewählt aus
A5) Verbindungen, die mindestens eine ionische oder potentiell ionische Gruppe aufweisen und/oder
A6) nichtionisch hydrophilierend wirkenden Verbindungen.

2. Nachvernetzbare Polyurethan-Polyharnstoffdispersionen gemäß Anspruch 1, **dadurch gekennzeichnet, dass** die Isocyanatgruppen der Komponente A1) zu mindestens 5 % in blockierter Form vorliegen.

3. Nachvernetzbare Polyurethan-Polyharnstoffdispersionen gemäß Anspruch 1, **dadurch gekennzeichnet, dass** diese einen Festkörpergehalt zwischen 10 bis 70 Gew.-% aufweisen.

4. Nachvernetzbare Polyurethan-Polyharnstoffdispersionen gemäß Anspruch 1, **dadurch gekennzeichnet, dass** diese einen Lösemittelanteil von kleiner 15 Gew.-% an der Gesamtzusammensetzung aufweisen.

5. Nachvernetzbare Polyurethan-Polyharnstoffdispersionen gemäß Anspruch 1, **dadurch gekennzeichnet, dass** als Blockierungsmittel Aralkylamine verwendet werden.

6. Nachvernetzbare Polyurethan-Polyharnstoffdispersionen gemäß Anspruch 1, **dadurch gekennzeichnet, dass** als Blockierungsmittel sekundäre Benzylamine verwendet werden.

7. Nachvernetzbare Polyurethan-Polyharnstoffdispersionen gemäß Anspruch 1, **dadurch gekennzeichnet, dass** als Blockierungsmittel N-tert. Butylbenzylamin verwendet wird.

8. Verwendung der nachvernetzbaren Polyurethan-Polyharnstoffdispersionen gemäß Anspruch 1 in Lack- und Beschichtungsmitteln.

9. Verwendung der nachvernetzbaren Polyurethan-Polyharnstoffdispersionen gemäß Anspruch 1 in Schlichten.

10. Verwendung der nachvernetzbaren Polyurethan-Polyharnstoffdispersionen gemäß Anspruch 1 in Glasfaserschlichten.

11. Beschichtungsmittel enthaltend nachvernetzbare Polyurethan-Polyharnstoff dispersionen gemäß Anspruch 1.

12. Schlichten enthaltend nachvernetzbare Polyurethan-Polyharnstoff-Dispersionen gemäß Anspruch 1.

13. Glasfaserschlichten enthaltend nachvernetzbare Polyurethan-Polyharnstoff-Dispersionen gemäß Anspruch 1.

14. Substrate beschichtet mit einem Beschichtungsmittel enthaltend nachvernetzbare Polyurethan-Polyharnstoff-Dispersionen gemäß Anspruch 1.

15. Glasfasern beschlichtet mit einer Schlichte enthaltend nachvernetzbare Polyurethan-Polyharnstoff-Dispersionen gemäß Anspruch 1.

## Claims

1. Aqueous, post-crosslinkable polyurethane-polyurea dispersions built up from:
A1) polyisocyanates,
A2) polymeric polyols with average molecular weights of 400 to 6000,
A3) optionally mono- or polyalcohols or mono- or polyamines with average molecular weights of up to 400,
A4) at least one blocking agent consisting of at least 20 wt.% aralkylamines,
and at least one compound selected from
A5) compounds containing at least one ionic or potentially ionic group and/or
A6) compounds with a non-ionically hydrophilising action.

2. Post-crosslinkable polyurethane-polyurea dispersions according to claim 1, **characterised in that** at least 5% of the isocyanate groups of component A1) are present in blocked form.

3. Post-crosslinkable polyurethane-polyurea dispersions according to claim 1, **characterised in that** they have a solids content of between 10 and 70 wt.%.

4. Post-crosslinkable polyurethane-polyurea dispersions according to claim 1, **characterised in that** they have a solvent content of less than 15 wt.% of the total composition.

5. Post-crosslinkable polyurethane-polyurea dispersions according to claim 1, **characterised in that** aralkylamines are used as blocking agents.

6. Post-crosslinkable polyurethane-polyurea dispersions according to claim 1, **characterised in that** secondary benzylamines are used as blocking agents.

7. Post-crosslinkable polyurethane-polyurea dispersions according to claim 1, **characterised in that** N-tert. butylbenzylamine is used as blocking agent.

8. Use of the post-crosslinkable polyurethane-polyurea dispersions according to claim 1 in lacquers and coating compounds.

9. Use of the post-crosslinkable polyurethane-polyurea dispersions according to claim 1 in sizes.

10. Use of the post-crosslinkable polyurethane-polyurea dispersions according to claim 1 in glass fibre sizes.

11. Coating compounds containing post-crosslinkable polyurethane-polyurea dispersions according to claim 1.

12. Sizes containing post-crosslinkable polyurethane-polyurea dispersions according to claim 1.

13. Glass fibre sizes containing post-crosslinkable polyurethane-polyurea dispersions according to claim 1.

14. Substrates coated with a coating compound containing post-crosslinkable polyurethane-polyurea dispersions according to claim 1.

15. Glass fibres sized with a size containing post-crosslinkable polyurethane-polyurea dispersions according to claim 1.

## Revendications

1. Dispersions de polyuréthane-polyurée post-réticulables, aqueuses, constituées de :
A1) polyisocyanates,
A2) polyols polymères de poids moléculaires moyens allant de 400 à 6.000,
A3) le cas échéant, mono- ou polyalcools ou mono- ou polyamines de poids moléculaires moyens allant jusqu'à 400,
A4) au moins un agent bloquant, qui est constitué à raison d'au moins 20% en poids d'aralkylamines,
ainsi qu'au moins un composé choisi parmi
A5) des composés qui comportent au moins un groupe ionique ou potentiellement ionique et/ou
A6) des composés à effet hydrophilisant non ioniques.

2. Dispersions de polyuréthane-polyurée post-réticulables selon la revendication 1, **caractérisées en ce que** les groupes isocyanates du composant A1) sont présents à raison d'au moins 5% sous forme bloquée.

3. Dispersions de polyuréthane-polyurée post-réticulables selon la revendication 1, **caractérisées en ce que** celles-ci présentent une teneur en matières solides entre 10 et 70% en poids.

4. Dispersions de polyuréthane-polyurée post-réticulables selon la revendication 1, **caractérisées en ce que** celles-ci comportent une proportion de solvant inférieure à 15% en poids par rapport à la composition totale.

5. Dispersions de polyuréthane-polyurée post-réticulables selon la revendication 1, **caractérisées en ce que** l'on utilise comme agent bloquant des aralkylamines.

6. Dispersions de polyuréthane-polyurée post-réticulables selon la revendication 1, **caractérisées en ce qu'**on utilise comme agent bloquant des benzylamines secondaires.

7. Dispersions de polyuréthane-polyurée post-réticulables selon la revendication 1, **caractérisées en ce qu'**on utilise comme agent bloquant la N-tert.butylbenzylamine.

8. Utilisation des dispersions de polyuréthane-polyurée post-réticulables selon la revendication 1 dans les produits pour peintures et de revêtement.

9. Utilisation des dispersions de polyuréthane-polyurée post-réticulables selon la revendication 1 dans les colles.

10. Utilisation de dispersions de polyuréthane-polyurée post-réticulables selon la revendication 1 dans des colles pour fibres de verre.

11. Produit de revêtement contenant des dispersions de polyuréthane-polyurée post-réticulables selon la revendication 1.

12. Colles contenant des dispersions de polyuréthane-polyurée post-réticulables selon la revendication 1.

13. Colles pour fibres de verre contenant des dispersions de polyuréthane-polyurée post-réticulables selon la revendication 1.

14. Substrats revêtus avec un produit de revêtement contenant des dispersions de polyuréthane-polyurée post-réticulables selon la revendication 1.

15. Fibres de verre encollées avec une colle contenant des dispersions de polyuréthane-polyurée post-réticulables selon la revendication 1.
